# EUROPÄISCHE PATENTSCHRIFT

(11) **EP 2 091 852 B1**
(45) Veröffentlichungstag und Bekanntmachung des Hinweises auf die Patenterteilung: **01.01.2014**
(21) Anmeldenummer: 07856246.9
(22) Anmeldetag: 23.11.2007
(51) Int. Cl.: B65G 69/00

(54) **DACHENTWÄSSERUNG FÜR LASTKRAFTWAGEN**
ROOF DRAINAGE FOR TRUCKS
DRAINAGE DE TOIT POUR CAMIONS

(30) Priorität: 23.11.2006 DE 102006055701
(43) Veröffentlichungstag der Anmeldung: 26.08.2009
(73) Patentinhaber: Grunewald, Niclas, 20146 Hamburg (DE)
(72) Erfinder: Grunewald, Niclas, 20146 Hamburg (DE)
(74) Vertreter: Vonnemann, Gerhard
(86) Internationale Anmeldenummer: PCT/EP2007/010214
(87) Internationale Veröffentlichungsnummer: WO 2008/061790

(56) Entgegenhaltungen:
- US-A- 4 085 966
- US-A- 5 622 016
- US-A1- 2005 166 488
- US-B1- 6 276 098

## Beschreibung

Die Erfindung betrifft eine Dachentwässerung für Lastkraftwagen, wobei die Dachentwässerung als Rinne ausgebildet ist. Außerdem betrifft die Erfindung eine Toröffnung in einem Gebäude zum Be- und Entladen eines herangefahrenen Lastkraftwagens.

Bei Regen oder beim Abtauen von Schnee oder Eis, das sich auf dem Dach eines Lastkraftwagen befindet, kann es zu Schwall- oder Tropfenbildungen kommen, die beim Be- und Entladen von Lastkraftwagen stören. Diese Schwall- oder Tropfenbildung tritt noch verstärkt auf, wenn der Lastkraftwagen auf Verkehrsflächen steht, die eine Neigung zur hinteren Ladeöffnung aufweisen. In solchen Fällen kann ein grosser Teil des auf das Dach geregneten Wassers über die hintere Dachkante des Lastkraftwagen ablaufen. Dabei kann das Ladegut durch den herabströmenden Wasserschwall Schaden nehmen. In Extremfällen müssen die Ladevorgänge sogar unterbrochen werden, was zu Störungen im Betriebsablauf führt.

Zur Vermeidung derartiger Probleme schlägt die amerikanische Patentanmeldung US 2005/0166488 A1 einen Regenwasserabweiser vor, der in einem Abstand oberhalb einer Gebäudeöffnung frei herabhängend angeordnet ist. Ein an eine derartig ausgerüstete Gebäudeöffnung heranfahrender Lastkraftwagen, unterfährt den Regenwasserabweiser, so dass dieser auf dem Dach des Lastkraftwagen aufliegt. Die Wirksamkeit eines solchen Regenwasserabweisers ist jedoch auf kastenförmige Lastkraftwagen-Aufbauten beschränkt. Der Regenwasserabweiser passt sich nicht an andere Formen des Lastkraftwagen-Daches an. Insbesondere in Fällen, bei denen die Dachplane des Lastkraftwagen durchhängt, kann der Regenwasserabweiser unterströmt und in solchen Fällen wirkungslos werden.

Aus der US 6, 276, 098 B1 ist eine Toröffnung in einer Gebäudewand bekannt, die zum Be- und Entladen an die Toröffnung herangefahrener Lastkraftwagen dienen. Diese Toröffnung ist allseitig von einer Dichtung umgeben, die den Spalt durch herabhängende Dichtschürzen zu den Aufbauten des LKWs abdichtet. Die dazu dienenden Planen sind an ihren Rändern mit Kedern versehen und in Nuten eines an die Gebäudewand befestigten Profils eingezogen. Zur Verhinderung, dass von der Gebäudewand ablaufender Regen weiter auf die Dichtplane gelangt, ist das Montageprofil in dem nach oben gerichteten Bereich als Rinne ausgebildet. Diese Rinne dient folglich zum Abführen des von der Gebäudewand ablaufenden Regenwassers.

Aus der weiteren Entgegenhaltung US 5, 622, 016 ist eine Abdichtung für Ladeöffnungen innerhalb von Gebäudewänden bekannt, bei der ein oberer wulstartig geformter dreieckiger Dichtwulst sich an die hintere Kante einer Ladeöffnung eines Lastkraftwagens anlegen soll. Dieser Dichtwulst führt etwaiges von der Dachfläche des Lastkraftwagens ablaufende Wasser seitlich unkontrolliert ab. Wind oder andere Einflüsse können dabei bewirken, dass möglicherweise das Wasser auch die Be- und Entladevorgänge stört. Diese vorbekannte Dichtung verzichtet vollkommen auf rinnenförmige Teile.

Der aus der US 4, 085, 966, das die Oberbegriffe von Ansprüchen 1 und 8 offenbart, bekannte Vorschlag zur Lösung des auch der Erfindung zu Grunde liegenden Problems, nämlich das auf dem Dache eines LKW-Aufbaus abfließende Wasser gezielt abzuführen, bedient sich einer Rinne, die in den Dachaufbau des LKW integriert ist und den hinteren Kantenabschluss des die Ladeöffnung berandenden Deckenbereichs bildet. Diese Rinne befindet sich oberhalb der Ladeöffnung und soll das vom Dach abfließende Wasser zur Seite abführen, bevor es von der hinteren Dachkante abtropfen kann. Die LKW-Tür schlägt gegen diesen hinteren Abschluss beim Schließen der Tür.

Dieser Vorschlag beseitigt das Problem auf Seiten des LKWs. Das Problem, auch bei unterschiedlichen LKW-Aufbauten, die nicht nach dieser vorbekannten Weise ausgebildet sind, an Toröffnungen von Gebäuden anfahren zu lassen, ohne dass ablaufendes Wasser die Be- und Entladevorgänge stören kann, löst dieser Dachkantenabschluss nicht.

Aufgabe der Erfindung ist es, eine Dachentwässerung für Lastkraftwagen vorzuschlagen, die auch bei unterschiedlichen Lastkraftwagen-Aufbauten zum Einsatz kommen kann und dabei ihre Wirksamkeit behält.

Diese Aufgabe wird bei einer Dachentwässerung für Lastkraft wagen, wobei die Dachentwässerung als Rinne ausgebildet ist, dadurch gelöst, dass die Rinne vertikal verstellbar ausgebildet ist und/oder das die Rinne horizontal parallel zu ihrer Längsachse und/oder senkrecht zu ihrer Längsachse horizontal verstellbar ausgebildet ist. Die Rinne, die sich unterhalb der hinteren Dachkante des Lastkraftwagen-Aufbaus befindet, fängt sicher die von der Dachkante herabfallenden Tropfen auf und leitet sie aus dem Bereich ab, der für die Be- und Entladung des Lastkraftwagen freibleiben soll.

Die Rinne ist an einem Gebäude befestigt. Beispielsweise stationär vor der Gebäudeöffnung, an die Lastkraftwagen zum Be- und Entladen heranfahren.

Mit Vorteil ist mindestens eine Seitenwand der Rinne verlängert ausgebildet, um die Anfahrtoleranzen von Lastkraftwagen an die Gebäudeöffnung auszugleichen und sicher die herabfallenden Tropfen auffangen zu können. Eine Seitenwandverlängerung legt sich beispielsweise von unten gegen die Decke des Lastkraftwagen und die zweite Seitenverlängerung dichtet zur Gebäudewand ab, und verhindert dadurch ein Überströmen der Rinne.

Die Wirkung der Rinne wird verbessert, wenn sie vertikal verstellbar ausgebildet ist. Zu diesem Zweck kann sie in Vertikalführungen, die am Gebäude befestigt sind, vertikal verstellbar unter der Dachkante eines Lastkraftwagen bewegt werden, um alle herabfallenden Tropfen sicher aufzufangen.

Wenn die Rinne horizontal parallel zu ihrer Längsachse verstellbar ausgebildet ist, können auch seitliche Anfahrtoleranzen parkender Lastkraftwagen ausgeglichen werden.

Die Maßnahme, dass die Rinne senkrecht zu ihrer Längsachse horizontal verstellbar ausgebildet ist, dient ebenfalls ihrer genaueren Positionierbarkeit an die Lage der Lastkraftwagen-Dachkante.

Damit ein Ablauf der Rinne durch die auf die Ladefläche des Lastkraftwagen fahrende Flurförderzeuge nicht beschädigt werden kann, ist vorgesehen, dass die Rinne eine Ablauf aufweist, der außerhalb einer Toröffnung angeordnet ist.

Dadurch, dass die Rinne und/oder die Seitenwandverlängerung in ihrer Längsachse kürzer als eine Breite einer Ladeöffnung eines Lastkraftwagen ausgebildet ist, ragt insbesondere die Seitenwandverlängerung in den Laderaum des Lastkraftwagen ein Stück hinein.

Wenn eine Seitenwandverlängerung klappbar ausgebildet ist, vorzugsweise um eine zur Rinnenachse parallele Achse, kann sie für die Ruhestellung in eine vertikale Lage gestellt werden. In dieser Lage ist sie vor Beschädigungen durch andockende Lastkraftwagen geschützt.

Dadurch, dass die weitere Seitenwandverlängerung als Vorhang, vorzugsweise als selbsttätig aufrollender Vorhang, ausgebildet ist, dichtet sie die Rinne zum Gebäude hin und passt sich in ihrer vertikalen Ersteckung an die veränderliche Lage der Rinne selbsttätig an.

Die zuvor genannten Verstellbewegungen können erleichtert werden, wenn die Rinne mindestens einen motorischen Stellantrieb aufweist. Je nachdem, welche Freiheitsgrade für die Rinne konstruktiv verwirklicht werden, kann für jeden Freiheitsgrad oder auch durch Kopplung von mehreren Freiheitsgraden gleichzeitig die Verstellung mittels eines Motors kraftbetrieben erzeugt werden. Als Motoren kommen insbesondere für die linearen Stellbewegungen Kolben-Zylinder-Antriebe oder Spindel-Mutter-Antriebe zum Einsatz. Die vertikale Verstellung lässt sich sehr günstig beispielsweise durch einen Rohrmotor verwirklichen, der den Vorhang der weiteren Seitenwandverlängerung auf- bzw. abwickelt. Der Motor dient dabei gleich als Wickelwelle

Dadurch, dass der mindestens eine motorische Stellantrieb eine Wirkverbindung zu einer Tor- oder Überladebrückensteuerung aufweist, lassen sich die einzelnen Bewegungen auch mit den übrigen Funktionen eines weitgehend automatisierten Andockens von Lastkraftwagen verriegeln. Die Bewegungen der Rinne werden dann weitgehend automatisch von der Steuerung der Tor- oder Überladenbrücke übernommen.

Zur Verhinderung eines seitlichen Überströmens der Rinne oder ihrer Seitenwand ist mit Vorteil vorgesehen, dass die Seitenwandverlängerung und/oder Rinnenenden Überströmhindernisse aufweist.

Mit Vorteil lässt sich die Seitenwandverlängerung auch an die innere Breite eines Lastkraftwagen-Aufbaus dadurch anpassen, dass die Seitenwandverlängerung in Längsrichtung der Rinne längenverstellbar ausgebildet ist. Sobald die Seitenverlängerungen in Position gebracht werden, kann sie anschließend so verlängert werden, dass ihre Kanten innen an die Seitenwände eines Lastkraftwagenaufbaus anschlagen.

Zur erleichterten, insbesondere manuellen, Handhabung der Rinne ist mit Vorteil vorgesehen, dass die Dachentwässerung eine Gewichtskompensierung aufweist. Dadurch kann die Rinne dem Federweg des Lastkraftwagens selbsttätig folgen, der beim Be- und Entladen entsteht.

Die Gewichtskompensierung kann beispielsweise als Federwelle und/oder als Gegengewicht ausgebildet sein.

Die Erfindung wird in einer bevorzugten Ausführungsform unter Bezugnahme auf eine Zeichnung beispielhaft beschrieben, wobei weitere vorteilhafte Einzelheiten den Figuren der Zeichnung zu entnehmen sind.

Funktionsmäßig gleiche Teile sind dabei mit denselben Bezugszeichen versehen.

Die Figuren der Zeichnung zeigen im Einzelnen:
- Figur 1:: einen Vertikalschnitt einer typischen Situation eines an einer Toröffnung bereitgestellten Lastkraftwagen,
- Figur 2:: einen Vertikalschnitt gemäß Figur 1 mit der erfindungsgemäßen Dachentwässerung in Ruheposition,
- Figur 3:: einen Horizontalschnitt gemäß Schnittlinie A-A in Figur 2,
- Figur 4:: einen Vertikalschnitt gemäß Figur 1 mit der erfindungsgemäßen Dachentwässerung in herabgezogener Position,
- Figur 5:: einen Vertikalschnitt gemäß Figur 1 mit der erfindungsgemäßen Dachentwässerung in Figur 4,
- Figur 6:: einen Vertikalschnitt gemäß Figur 1 mit der erfindungsgemäßen Dachentwässerung in herausklappbarer Position,
- Figur 7:: einen Vertikalschnitt gemäß Figur 1 mit der erfindungsgemäßen Dachentwässerung in Figur 6,
- Figur 8:: einen Vertikalschnitt gemäß Figur 1, jedoch mit der erfindungsgemäßen Dachentwässerung in der Arbeitsposition
- Figur 9:: einen Horizontalschnitt gemäß Schnittlinie A-A in Figur 8 und
- Figur 10:: einen Vertikalschnitt der Dachentwässerung in Arbeitslage als vergrößerte Darstellung.

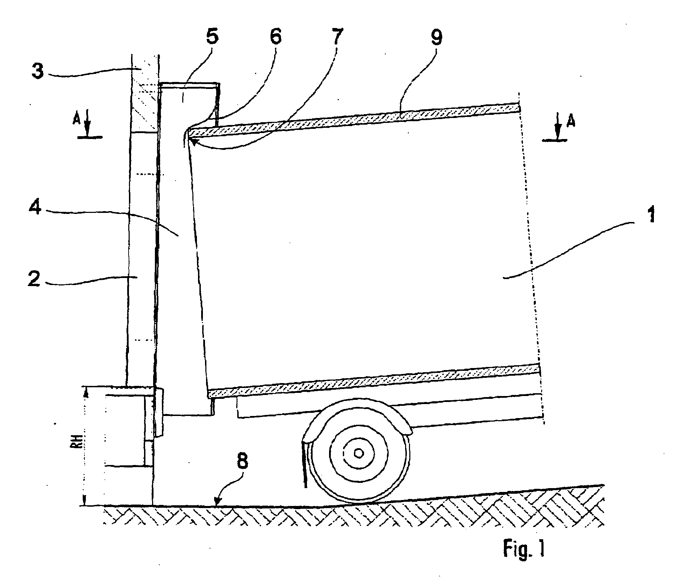

Figur 1 zeigt einen Lastkraftwagen 1, der an eine Toröffnung 2 in einer Gebäudewand 3 herangefahren ist. Den Abstand 4 zwischen Gebäudewand 3 und Lastkraftwagen 1 überbrückt dichtend eine Torabdichtung 5. Die Lamellen 6 legen sich beim Einfahren des Lastkraftwagen 1 in die Torabdichtung 5 an die obere Kante 7 des Lastkraftwagen an.

Die Verkehrsfläche 8 ist zur Öffnung 2 hin geneigt, so dass der Lastkraftwagen nicht unbeabsichtigt von der Toröffnung 3 fortrollen kann. Etwaiges Tauwasser oder Regenwasser auf dem Dach 9 des Lastkraftwagen läuft dabei in Richtung Gebäudeöffnung und tropft dann nach Erreichen der Kante 7 entlang den Lamellen 6 nach unten innerhalb des Abstandes 4 des Lastkraftwagen und Gebäudewand 3 ab.

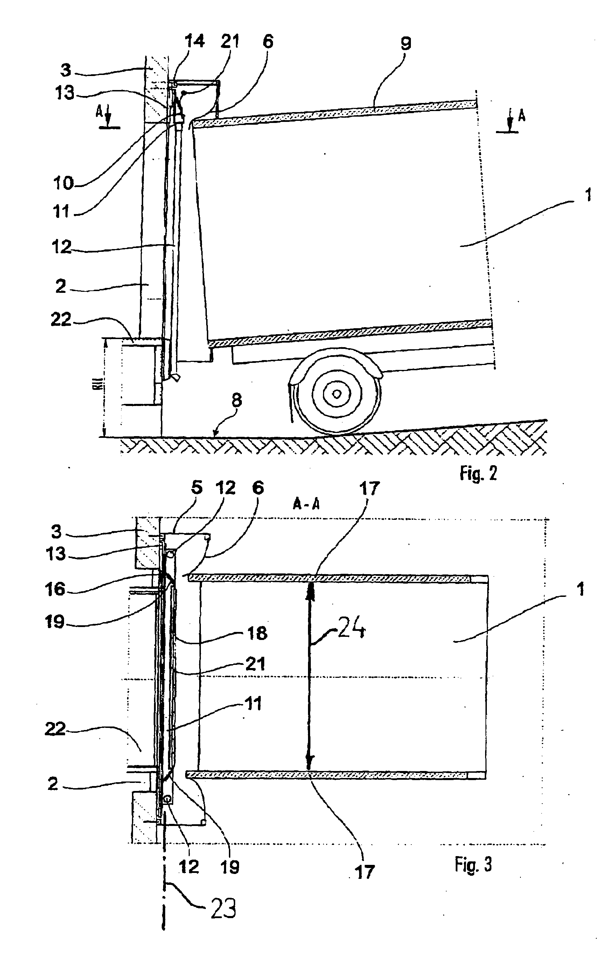

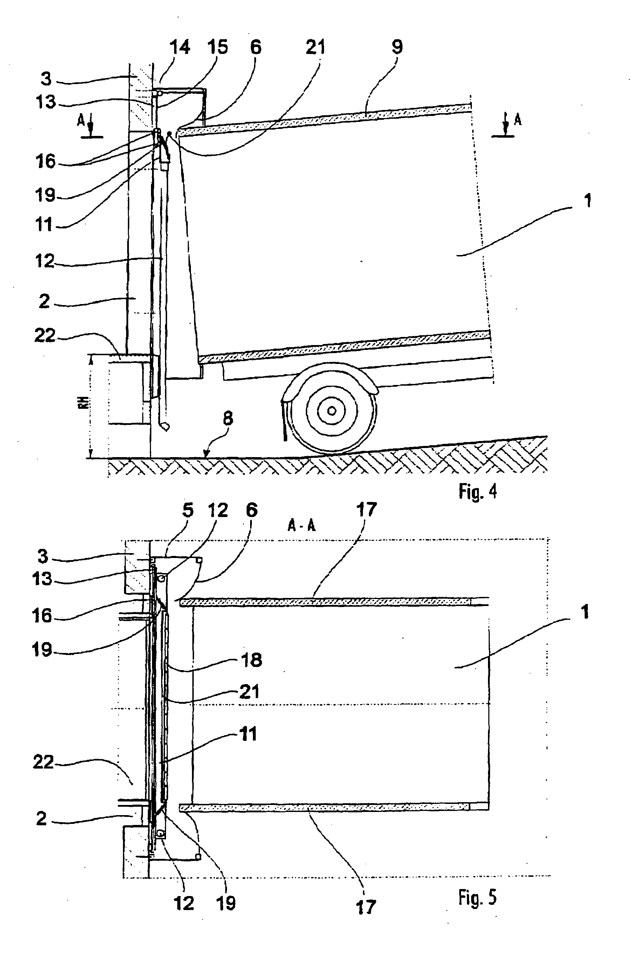

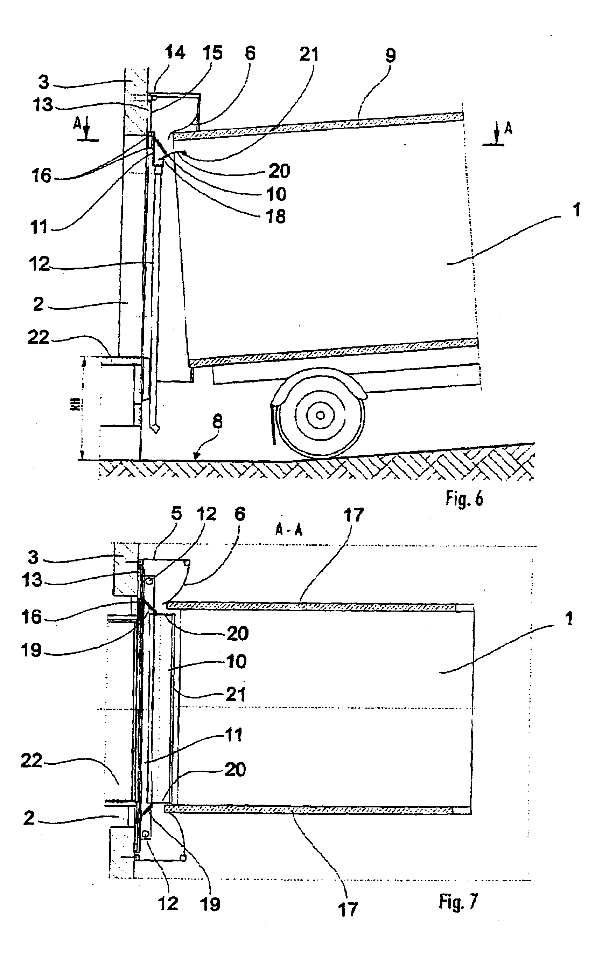

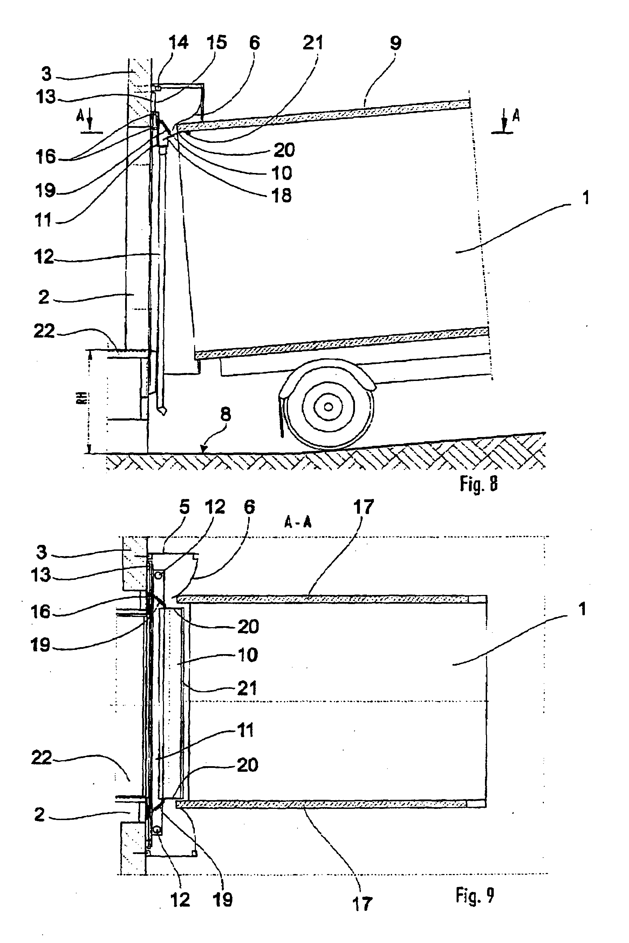

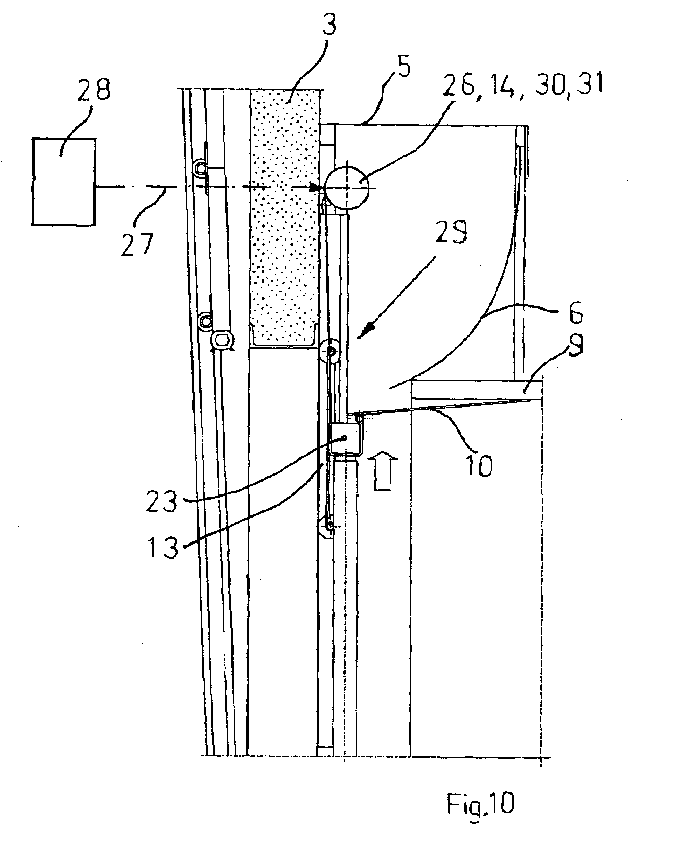

Zur Vermeidung dieser Situation dient die erfindungsgemäße Dachentwässerung. Diese ist in den Figuren 2, 4, 6, 8 und 10 als Vertikalschnitt und in den Figuren 3, 5, 7 und 9 als Horizontalschnitt dargestellt. Das von den Lamellen 6 abtropfende Wasser gelangt zunächst auf eine ausgeklappte Seitenwandverlängerung 10 und wird von dieser in die Rinne 11 geleitet. Das Überströmen der Rinne wird durch die gegenüberliegende weitere Seitenwandverlängerung 25 (Figur 10) verhindert, die in Form eines auf der Welle 31 aufwickelbaren Vorhangs ausgebildet ist. Das Ende des Vorhangs 32 ist mit der Kante der Rinne 11 verbunden. Aus der Rinne 11 gelangt das Wasser dann über Abläufe 12 auf die Verkehrsfläche 8, wo es von dem üblichen Drainagesystem aufgenommen wird.

Um die Rinne 11 in Position bringen zu können, ist sie an Vertikalführungen 13 befestigt. Die Vertikalführungen 13 erlauben eine Höhenverstellung der Rinne relativ zu der Gebäudewand 3. Als Entlastung ist eine Federwelle 14 vorgesehen, deren Rückstellkraft geringfügig höher als das Gewicht der gesamten Rinne ist. Die Federwelle 14 zieht über das Seil 15 oder den Vorhang 32 die Rinne 11 nach oben, so dass sich die Seitenwandverlängerung 10 gegen die innere Fläche des Daches 9 anlegt. Die weitere Seitenwandverlängerung ist an der gegenüberliegenden Rinnenkante befestigt.

Zusätzlich weist die Rinne 11 Horizontalführungen 18 auf, so dass sie auch horizontal verschiebbar ist, um die Seitenwandverlängerung 10 zwischen die Seitenwände 17 des Lastkraftwagen 1 positionieren zu können. Stattdessen könnte auch die Seitenwandverlängerung 10 horizontal verschieblich an der Rinne 11 befestigt sein und die Rinne wiederum fest mit der Gebäudewand 3 verbunden sein.

Die Seitenwandverlängerung 10 ist um die Achse 18 schwenkbar an der vorderen Kante der Rinne 11 gelagert. Zwei seitlich angreifende Zugfedern 19 halten die Verlängerung in der dargestellten Lage, so dass sie unter leichtem Federdruck gegen die Innenkante des Daches 9 drückt. Die Verlängerung 10 kann geteilt und überlappend ausgebildet sein, so dass auch ihre Breite an die Breite 24 der Ladeöffnung des Lastkraftwagen-Aufbaus anpassbar ist.

In einer bevorzugten Ausführungsform ist die Wickelwelle 31 mit einem Rohrmotor als Stellantrieb 26 versehen. Das Gewicht der Rinne 11 wirkt auf das Ende des Vorhangs 32 der vom Rohrmotor vertikal auf- bzw. abgerollt wird und so die Höhenlage der Rinne bestimmt. Durch eine Wirkverbindung 27 wird der Motor von einer Überladebrückensteuerung 28 angesteuert. Der Motor hat eine Betriebsart in der er den Vertikalbewegungen des Lastkraftwagen folgt.

Wird z. B. die Überladebrücke in ihre Betriebslage gefahren, so geschieht dies auch für die Dachentwässerung, die mit den Befehlen zur Steuerung der Überladebrücke in geeigneter Weise verriegelt ist.

Seitlich angeordnete Bleche bieten einen Überlaufschutz 20, so dass auch bei geringfügiger Neigung das von der Verlängerung 10 aufgefangene Wasser sicher in die Rinne 11 gelangt. Die Verlängerung 10 kann zusätzlich durch eine elastische Dichtlippe 21 ergänzt werden, um eine noch bessere Abdichtung zum Lastkraftwagen zu erreichen.

Alle Verstellbewegungen der Rinne mit ihren Anbauten können zur leichteren Handhabung auch kraftbetätigt erzeugt werden. Zur Verfügung stehen sowohl elektrische als auch pneumatische oder hydraulische Antriebe.

Besonders einfach und robust lässt sich jedoch die Dachentwässerung manuell betätigen. Vor dem Heranfahren des Lastkraftwagen 1 wird die Dachentwässerung entlang ihrer Vertikalführung 13 manuell mittels eines nicht dargestellten Handgriffes nach unten gezogen, so dass der Lastkraftwagen in die Torabdichtung 5 hereinfahren kann. Dabei wird die Verlängerung 10 von der Feder 19 in zunächst ihrer vertikalen Position gehalten. Sobald der Lastkraftwagen in der Be- bzw. Entladeposition gesichert ist, wird manuell die Verlängerung 10 aus ihrer vertikalen Position in die zeichnerisch dargestellte ausgeklappte Position herausgeklappt. Die Rückstellkraft der Feder 19 hält dem Klappmoment der Verlängerung die Waage. Sobald dann die Dachentwässerung losgelassen wird, zieht die Federwelle 14 mittels des Vorhangs 32 die Rinne 11 und mit ihr die Verlängerung 10 an der Vertikalführung nach oben, so dass sich die Dichtlippe 21 innen gegen das Dach 9 des Lastkraftwagen 1 legt.

Nach Beendigung der Ladevorgänge wird die Rinne wieder manuell gegen das Rückstellmoment der Federwelle 14 nach unten gezogen und die Verlängerung 10 in ihre Position gebracht. Nach dem Loslassen zieht dann die Federwelle 14 an den Vertikalführungen 13 die Rinne 11 wieder vertikal nach oben in die Bereitschaftsposition der Dachrinne. Durch das Rückstellmoment der Federwelle folgt die Rinne selbsttätig dem Einfedern des Lastkraftwagens beim Beladen und bleibt auch beim Ausfedern in der Lage, wenn der Lastkraftwagen entladen wird. Die Rinnenabläufe 12 sind seitlich der Toröffnung 2 angeordnet, so dass die Abläufe außerhalb des durch Flurförderzeuge gefährdeten Bereiches liegen und auch durch heranfahrende Lastkraftwagen nicht beschädigt werden können. Der seitliche Abstand der Rinne zu der Torabdichtung 5 erlaubt deren horizontale Verstellung, um mit ihr die Verlängerung 10 an die jeweilige Position des Lastkraftwagen 1 anpassen zu können. Wie erwähnt, kann auch stattdessen bei geeigneter Konstruktion die Verlängerung 10 horizontal verschieblich an der Rinne 11 gelagert sein und zur Anpassung an die Position des Lastkraftwagen dienen.

Etwaig vorgesehene Antriebe der Dachentwässerung mit geeigneten Sensoren zur Erkennung der Position des Lastkraftwagen können mit der Steuerung einer Überladebrücke 22 so verriegelt werden, dass die zuvor beschriebenen Bewegungsabläufe weitgehend automatisch erfolgen können.

Auf diese Weise können witterungsbedingte Unterbrechungen der Ladetätigkeiten vorteilhaft durch das erfindungsgemäße Dachentwässerungssystem vermieden werden.

### BEZUGSZEICHENLISTE

- 1: Lastkraftwagen
- 2: Toröffnung
- 3: Gebäudewand
- 4: Abstand
- 5: Torabdichtung
- 6: Lamelle
- 7: Kante
- 8: Verkehrsfläche
- 9: Dach
- 10: Seitenwandverlängerung
- 11: Rinne
- 12: Ablauf
- 13: Vertikalführungen
- 14: Federwelle
- 15: Seil, Vorhang
- 16: Horizontalführung
- 17: Seitenwand (Lastkraftwagen)
- 18: Achse
- 19: Zugfeder
- 20: Überlaufschutz
- 21: Dichtlippe
- 22: Überladebrücke
- 23: Längsachse
- 24: Ladeöffnungsbreite
- 25: weitere Seitenwandverlängerung
- 26: Stellantrieb
- 27: Wirkverbindung
- 28: Überladebrückensteuerung
- 29: Dachentwässerung
- 30: Gewichtskompensierung
- 31: Welle
- 32: Vorhang

## Patentansprüche

1. Dachentwässerung für Lastkraftwagen, wobei die Dachentwässerung als Rinne ausgebildet ist, **dadurch gekennzeichnet, dass** die Rinne unterhalb eines Spaltes zwischen hinterem Dachkantenbereich eines Lastkraftwagen und einer Toröffnung eines Gebäudes am Gebäude befestigt ist und wobei die Rinne (11) vertikal verstellbar ausgebildet ist und/oder horizontal parallel zu ihrer Längsachse (23) und/oder senkrecht zu ihrer Längsachse (23) horizontal verstellbar ausgebildet ist.

2. Dachentwässerung nach einem der vorhergehenden Ansprüche, **dadurch gekennzeichnet, dass** mindestens eine Seitenwand (10), vorzugsweise beide Seitenwände mittels Seitenwandverlängerungen (10, 25) der Rinne (11) verlängert ausgebildet sind.

3. Dachentwässerung nach einem der vorhergehenden Ansprüche, **dadurch gekennzeichnet, dass** die Dachentwässerung einen Ablauf (12) aufweist, der außerhalb einer Toröffnung (2) angeordnet ist.

4. Dachentwässerung nach Anspruch 2, **dadurch gekennzeichnet, dass** eine Seitenwandverlängerung (10) klappbar ausgebildet ist, vorzugsweise um eine zur Rinnenkante (23) parallele Achse und/oder die weitere Seitenwandverlängerung als Vorhang, vorzugsweise als selbsttätig aufrollender Vorhang, ausgebildet ist.

5. Dachentwässerung nach einem der vorhergehenden Ansprüche, **dadurch gekennzeichnet, dass** die Dachentwässerung mindestens einen motorischen Stellantrieb (26) aufweist, wobei vorzugsweise der mindestens eine motorische Stellantrieb (26) eine Wirkverbindung zu einer Tor- oder Überladebrückensteuerung (28) aufweist.

6. Dachentwässerung nach einem der vorhergehenden Ansprüche, **dadurch gekennzeichnet, dass** die Seitenwandverlängerung und/oder Rinne (11) Überströmhindernisse, vorzugsweise an deren Ende, aufweist und/oder die Seitenwandverlängerung (10) in ihrer Längsrichtung (23) längenverstellbar ausgebildet ist.

7. Dachentwässerung nach einem der vorhergehenden Ansprüche, **dadurch gekennzeichnet, dass** die Dachentwässerung (29) ein Gewicht aufweist, welches mittels einer Federwelle (14) und/oder mittels eines entgegengesetzt wirkenden Gewichts kompensiert ausgebildet ist.

8. Toröffnung (2) in einem Gebäude und ein zum Be- und Entladen herangefahrener Lastkraftwagen (1), **dadurch gekennzeichnet, dass** unterhalb eines Spalts zwischen einer Decke einer Ladeöffnung des Lastkraftwagens (1) und der Toröffnung (2) eine Rinne (11) angeordnet ist.

9. Toröffnung nach Anspruch 8, **dadurch gekennzeichnet, dass** die Rinne (11) und/oder Seitenwandverlängerung (10) in ihrer Längsachse (23) kürzer als eine Breite der Ladeöffnung (24) des Lastkraftwagens (1) ausgebildet ist.

## Claims

1. A Roof drainage for trucks, wherein the roof drainage is configured as a gutter, **characterized in that** said gutter is disposed beneath a gap between a rear roof edge region of a truck and a door opening of a building at said building, and wherein said gutter (11) is configured to be vertically adjustable and/or is configured to be horizontally adjustable, parallel to its longitudinal axis (23) and/or perpendicular to its longitudinal axis (23).

2. A roof drainage according to one the preceding claims, **characterized in that** at least one of a pair of side walls (10) is and preferably two of a pair of side walls are configured to be extended by means of a side wall extension (10, 25) of said gutter (11).

3. A roof drainage according to one of the preceding claims, **characterized in that** said roof drainage is provided with a downspout (12) which is disposed outside a door opening (2).

4. A roof drainage according to claim 2, **characterized in that** a side wall extension (10) is configured to be foldable, preferably about an axis parallel to a gutter edge (23), and/or the other side wall extension is configured as a curtain, preferably as a curtain that rolls up automatically.

5. A roof drainage according to one of the preceding claims, **characterized in that** said roof drainage is provided with at least one motor-driven actuator (26), wherein said at least one motor-driven actuator (26) is preferably operatively connected to a loading door control or load transfer bridge control (28).

6. A roof drainage according to one of the preceding claims, **characterized in that** at least one of said side wall extension and said gutter (11) is provided with overflow barriers, preferably at the end thereof, and/or the side wall extension (10) is configured to be length-adjustable in its longitudinal direction (23).

7. A roof drainage according to one of the preceding claims, **characterized in that** said roof drainage (29) has a weight which is configured to be compensated by a spring shaft (14) and/or by a counterweight.

8. A door opening (2) at a building for loading and unloading trucks (1) which are backed against said building, **characterized in that** a gutter (11) is disposed beneath a clearing between a top of the loading opening of said truck (1) and said door opening (2).

9. A door opening according to claim 8, **characterized in that** at least one of said gutter (11) and said side wall extension (10) has a longitudinal axis which is shorter than a width of the loading opening (24) of said truck (1).

## Revendications

1. Drainage de toit pour camions, le drainage de toit étant conçu comme rigole, **caractérisé en ce que** la rigole est fixée au bâtiment en dessous d'un écartement entre le bord arrière du toit d'un camion et une ouverture de porte d'un bâtiment, la rigole (11) pouvant être réglée dans le sens vertical et/ou pouvant être réglée dans le sens horizontal parallèlement à son axe longitudinal (23) et/ou perpendiculairement à son axe longitudinal (23) dans le sens horizontal.

2. Drainage de toit selon l'une des revendications précédentes, **caractérisé en ce qu'**au moins l'une des parois latérales (10), de préférence toutes les deux parois latérales sont prolongées au moyen de prolongements de paroi latérale (10,25) de la rigole (11).

3. Drainage de toit selon l'une des revendications précédentes, **caractérisé en ce que** le drainage de toit présente un tube de descente (12) disposé en dehors d'une ouverture de porte (2).

4. Drainage de toit selon la revendication 2, **caractérisé en ce que** l'un des prolongements de paroi latérale (10) peut pivoter, de préférence autour d'un axe parallèle au bord de la rigole (23), et/ou l'autre prolongement de paroi latérale se présente sous forme de rideau, de préférence sous forme de rideau à enroulement automatique.

5. Drainage de toit selon l'une des revendications précédentes, **caractérisé en ce que** le drainage de toit présente au moins un servomoteur (26) lequel, de préférence, est connecté à une commande de porte ou de pont de transbordement (28).

6. Drainage de toit selon l'une des revendications précédentes, **caractérisé en ce que** le prolongement de la paroi latérale et/ou la rigole (11) présente des moyens empêchant le débordement, disposés de préférence à son extrémité, et/ou la longueur du prolongement de la paroi latérale (10) peut être réglée dans le sens longitudinal (23).

7. Drainage de toit selon l'une des revendications précédentes, **caractérisé en ce que** le drainage de toit (29) présente un poids lequel est compensé au moyen d'un arbre (14) et/ou au moyen d'un poids à effet inverse.

8. Ouverture de porte (2) dans un bâtiment et camion (1) accosté pour le chargement et le déchargement **caractérisés en ce qu'**une rigole (11) est disposée en dessous d'un écartement entre le plafond d'une ouverture de chargement du camion (1) et l'ouverture de porte (2).

9. Ouverture de porte selon la revendication 8, **caractérisée en ce que** la rigole (11) et/ou le prolongement de la paroi latérale (10) est plus courte dans son axe longitudinal (23) que la largeur de l'ouverture de chargement (24) du camion (1).
